**Europäisches Patentamt**

**European Patent Office**

**Office européen des brevets**

(11) Publication number : **0 479 706 A1**

# (12) EUROPEAN PATENT APPLICATION

(21) Application number : **91500096.2**

(22) Date of filing : **13.08.91**

(51) Int. Cl.⁵ : **B01D 53/36**

A request for correction of the originally filed pages 2, 3, 4 of the description, in claim 1 and in the abstract has been filed pursuant to Rule 88 EPC. A decision on the request will be taken during the proceedings before the Examining Division (Guidelines for Examination in the EPO, A-V, 2.2).

(30) Priority : **20.08.90 ES 9002216**

(43) Date of publication of application :
**08.04.92 Bulletin 92/15**

(84) Designated Contracting States :
**AT BE CH DE DK FR GB GR IT LI LU NL SE**

(71) Applicant : **CARBONES PEDRAFORCA, S.A.**
**Pg. de la Paz, 7**
**E-08600 Berga (Barcelona) (ES)**

(72) Inventor : **Moreno Alvarez, Carlos**
**Paseo de la Paz, 7**
**E-08600 Berga (Barcelona) (ES)**

(74) Representative : **Ponti Grau, Ignasi**
**Pg. de Gracia, 33**
**E-08007 Barcelona (ES)**

(54) **Procedure and device for the reduction of the carbon monoxide, nitrogen oxides and hidrocarbons contained in the exhaust of endothermic engines.**

(57)    The gases are treated in three successive phases. First they pass through a mass of activated charcoal, with a base of lignitic coal, impregnated with a halogenated compound with a chlorine or bromine base, from which they then pass through a similar mass, impregnated with a Lewis Acid type substance, and finally they flow through a similar mass impregnated with a Lewis Base type substance. The device essentially comprises a series of three chambers (1, 2, 3) arranged in a line, with a cooling system (4) and containing inside them the filtrating masses (10, 11, 12) of the type indicated, the first (1) presenting entry (13) and exit (14) ducts, the former with flow valve (15), and another duct (16) for evacuation of the condensates.

**EP 0 479 706 A1**

The present invention refers to a procedure for the reduction of the carbon monoxide, nitrogen oxides and hydrocarbons contained in the exhaust gases of endothermic engines, in order to avoid same being projected to the exterior, with all the harmful effects which this can involve.

The invention also refers to the device appropriate for carrying out said procedure.

## BACKGROUND OF THE INVENTION

The emission of carbon monoxide, nitrogen oxides and hydrocarbons which accompany the exhaust gases of endothermicengines, both explosion and internal combustion types, is a problem which has still not been resolved satisfactorily. The passage of these gases into the atmosphere, with a high content of these compounds, raises serious problems of an ecological order, due to environmental pollution and contamination, which can be noted especially in large urban centres in which intense vehicle traffic increases said problem which, moreover, seriously affects environmental health conditions. The same occurs with the engines used in industrial installations, which similarly affect the hinterland of the large industrial zones.

With a view to reduction of these contents, there are known in the art only procedures which, with slight application variations, are all based on utilization of a platinum-rhodium catalyst (three-way catalyst). These systems have been developed by the firms Volvo and Bosch and are known under the name of LAMBDA SOND systems. These systems turn out to be excessively expensive in application, however, for the material used (catalyst) is of really high price and is therefore not always of profitable application.

## DESCRIPTION OF THE INVENTION

The procedure object of the invention is aimed at solving the problems described, improving the performance and, above all, permitting the application of much cheaper and more affordable means than the above-mentioned catalysts, and are easy to fit to a vehicle.

In accordance with said procedure, the treatment of the exhaust gases is carried out in three successive phases, in the first of which said gases pass through a mass of activated charcoal, based on lignitic coal, impregnated with a halogenated compound based on chlorine or bromine, to treat the gases in a second phase by passing them through a similar mass impregnated with a Lewis Acid type substance, capable of accepting an electron pair, thus submitting the gases to a process of catalysis of reduction of the nitrogen oxides which are retained in the bed of that mass. Finally, the resulting gases are submitted to a process of catalysis of oxidation, in which they circulate through a similar mass, impregnated with a Lewis Base type substance, which facilitates the union of the carbon monoxide with the bed of that mass.

The invention also refers to the device for carrying out the procedure described, which comprises a series of three chambers, arranged and intercommunicated in a line, for the continuous and successive passage of the gases through each one of them, which chambers are provided with a cooling system, such as an exterior cooling liner or the like, and containing in the interior the masses of activated charcoal of the type indicated, the first of said chambers, destined to the treatment of hydrocarbons, presenting air inlet and outlet ducts, the former with flow valve, and another duct for evacuation of the condensates from those hydrocarbons.

## DESCRIPTION OF THE DRAWINGS

For a better understanding of all that has been set forth, there are attached some drawings in which, in a purely schematic way and only by way of example, without any restrictive character whatsoever, a practical case of embodiment of a device suitable for carrying out the procedure object of the invention is shown.

## DESCRIPTION OF A PREFERRED EMBODIMENT

As can be seen in the aforesaid drawings, the device comprises a series of three chambers -1-, -2- and -3-, arranged and intercommunicated in a line, for the continuous and successive passage of the gases through each one of them, which chambers are provided with a cooling system, such as an exterior cooling liner or the like, and which, in the example shown, is formed by a tank -4- with exchanger tubes -5- and inlet and outlet ducts -6-7-, for circulation of a coolant fluid, which tank -4- is connected by ducts -8-9-, respectively, to chambers -2- and -3-, for the necessary cooling circulation.

The aforesaid chambers -1-2-3- each contain inside them activated charcoal masses based on lignitic coal, treated chemically by impregnation, in order to achieve a selective reaction with the noxious components of the gases treated.

The activated charcoal masses -10-11-12- are formed by lignitic coal with adsorption surface of between 1000 and 1500 m2/g of substance, a pore volume with respect to that of the particle of the order of 50% and a pore diameter ranging between 1 and 500 Angström.

In chamber -1- the mass of activated charcoal -10- of lignitic coal is impregnated with a halogenated compound (chlorine or bromine), thus achieving adsorption of the non-burnt residual hydrocarbons which may be accompanying those gases.

In chamber -2- the impregnation of the mass of activated charcoal -11- is carried out with a compound of the Lewis Acid type, capable of accepting an electron pair, producing thereby a catalysis of reduction of the nitrogen oxides, which facilitates their union with that mass or bed -11-.

Finally, the mass or bed -12- contained in the chamber -3- is impregnated with a compound of the Lewis base type, capable of releasing an electron pair, producing thereby catalyis of oxidation of the carbon monoxide which is retained by that mass or bed -12-.

The first of said chambers -1-, destined to the treatment of the hydrocarbons, presents air inlet -13- and outlet -14- ducts, the former with flow valve -15-, and another duct -16- for evacuation of the hydrocarbon condensates.

The assembly thus arranged, the device is connected, the inlet duct -13- of chamber -1- to the exhaust of the engine (in the case of vehicles, for example, the device could be fitted to replace the exhaust pipe muffler), connecting inlet -13- at the same time with an air supply source, preferably of warm air, which air will likewise pass through the bed -10-, in counter-flow with respect to the circulation of the exhaust gases, which will successively pass through beds -10-, 11- and -12- of chambers -1-, -2- and -3-, the aforesaid polluting components being purified as indicated, to exit to the exterior already purified through the opening or duct -18- of the chamber -3-.

The air flow which circulates along the ducts -13- 14- and through the bed -10-, combined with cooling by means of the cooling device -4-, will lead to the formation of condensates, which are eliminated through duct -16-.

Thanks to application of the procedure described, high levels of purification can be achieved, with retentions of up to more than 90% of the pollutant components, all this at low cost and with really remarkable simplicity.

The procedure described can be applied to any type of installation in which endothermic engines are used, thus proving to be of undeniable value in industrial zones, for elimination or maximum reduction of risks of environmental pollution, without ruling out application in vehicles, this of particular interest in urban zones or centres with heavy traffic.

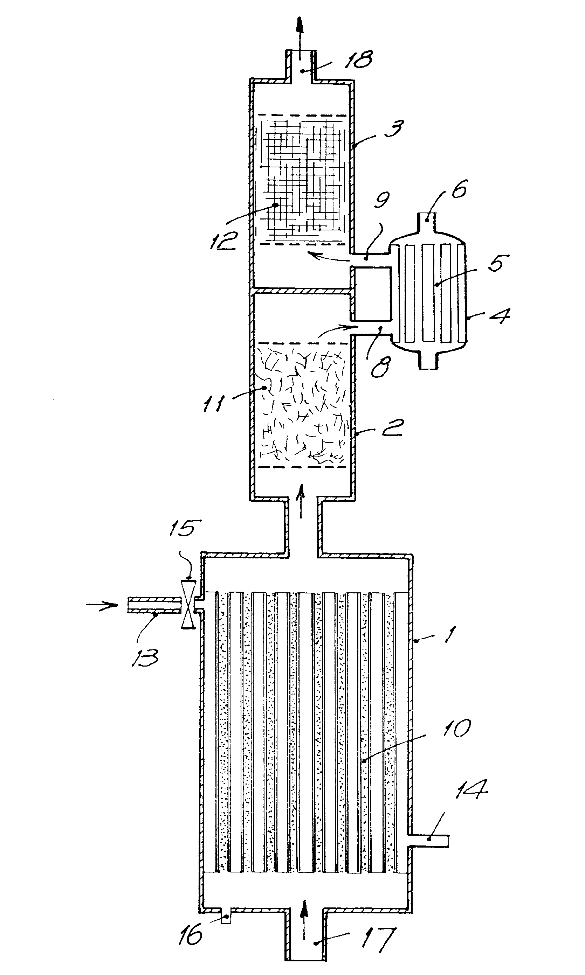

**Claims**

1. Procedure for the reduction of the carbon monoxide, nitrogen oxides and hydrocarbons contained in the exhaust gases of endothermic engines, by the method of microfiltering and adsorption, characterised in that the treatment of the exhaust gases is carried out in three successive phases, in the first of which said gases pass through a mass of activated charcoal, based on lignitic coal, impregnated with a halogenated compound based on chlorine or bromine, treating the gases in a second phase passing them through a similar mass impregnated with a Lewis Acid type substance, capable of accepting an electron pair, thus submitting the gases to a process of catalysis of reduction of the nitrogen oxides which are retained in the bed of that mass, and finally submitting the resulting gases, in a third phase, to a process of catalysis of oxidation, in which they are made to circulate through a similar mass impregnated with a Lewis Base type substance, which facilitates the union of the carbon monoxide with the bed of that mass.

2. Device for the reduction of carbon monoxide, nitrogen oxides and hydrocarbons contained in the exhaust gases of endothermic engines, for carrying out of the procedure according to the previous claim, characterised in that it comprises a series of three chambers (1,2,3), arranged and intercommunicated in a line, for the continuous and successive passage of the gases through each one of them, which chambers are provided with a cooling system (4), such as an exterior cooling liner or the like, and containing in the interior the masses of activated charcoal (10,11,12) of the type indicated, the first of said chambers (1), destined to the treatment of hydrocarbons, presenting air inlet (13) and outlet (14) ducts, the former with flow valve (15), and another duct (16) for evacuation of the condensates from those hydrocarbons.

EP 0 479 706 A1

European Patent Office

**EUROPEAN SEARCH REPORT**

Application Number

EP 91 50 0096

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 928 760 (TOYOTA JIDOSHA K.K.)<br>* figure 2; example 3 *<br>--- | 1,2 | B01D53/36 |
| A | GB-A-2 034 598 (TAKEDA CHEMICAL INDUSTRIES)<br>* claim 1 *<br>----- | 1 | |
| | | | **TECHNICAL FIELDS SEARCHED (Int. Cl.5)**<br><br>B01D<br>F01N |

The present search report has been drawn up for all claims

| Place of search | Date of completion of the search | Examiner |
|---|---|---|
| THE HAGUE | 24 OCTOBER 1991 | CUBAS ALCARAZ J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P0401)

5